# EUROPÄISCHE PATENTSCHRIFT

(11) **EP 0 653 324 B1**
(45) Veröffentlichungstag und Bekanntmachung des Hinweises auf die Patenterteilung: **31.01.1996**
(21) Anmeldenummer: 93117621.8
(22) Anmeldetag: 29.10.1993
(51) Int. Cl.: B60K 17/356, B60K 17/04

(54) **Verfahren zum hydrostatischen Antreiben eines Fahrzeugs**
Method for driving a vehicle hydrostatically
Procédé de propulsion hydrostatique pour véhicule

(43) Veröffentlichungstag der Anmeldung: 17.05.1995
(73) Patentinhaber: EC Engineering + Consulting Spezialmaschinen GmbH, D-89079 Ulm (DE)
(72) Erfinder: Kaspar, Ernst, D-89597 Munderkingen (DE)
(74) Vertreter: Grünecker, Kinkeldey, Stockmair & Schwanhäusser Anwaltssozietät

(56) Entgegenhaltungen:
- EP-A- 0 226 844
- EP-A- 0 505 254
- WO-A-91/01899
- DE-C- 4 212 983
- DE-U- 9 111 129
- FR-A- 1 360 296
- FR-A- 1 433 626
- FR-A- 2 104 535
- US-A- 3 115 204
- US-A- 3 344 879

## Beschreibung

Die Erfindung bezieht sich auf ein Verfahren zum hydrostatischen Antreiben eines Fahrzeugs mit wenigstens zwei ideellen Achsen, die jeweils wenigstens ein antreibbares Rad aufweisen, wobei jedes antreibbare Rad von wenigstens einem mit wenigstens einer Hydraulikquelle verbundenen Hydromotor angetrieben wird und die Antriebsleistung jedes Hydromotors über ein Übersetzungsgetriebe auf das jeweilige Rad übertragen wird.

Bei einem aus der FR-A-14 33 626 bekannten Verfahren dieser Gattung kann jedes Rad über ein zweistufiges Radnabengetriebe zwischen drei Antriebsgängen geschaltet werden. Zum Erreichen verschiedener Geschwindigkeits- und momentenanforderungen ist dieser Antrieb auf die Größe der Übersetzungen und den Verstellbereich des zugehörigen Hydromotors beschränkt. In der Praxis hat sich herausgestellt, daß der dadurch abgedeckte Fahrbereich nicht ausreicht. Mit einem auf hohe Momente ausgelegten Antrieb lassen sich in der Regel nur geringe Fahrgeschwindigkeiten realisieren, ein Antrieb für hohe Fahrzeuggeschwindigkeiten hat meist unzureichende Momentenabstufungen.

Dasselbe Problem ergibt sich bei einem aus der FR-A-13 60 296 bekannten hydrostatisch betriebener Radnabenantrieb, bei dem zusätzlich zu zwei unterschiedlichen Planetenstufen die Antriebsanforderungen durch den Leistungsbereich des antreibenden Hydromotors bestimmt ist.

Bei einem aus der WO91/017899 bekannten Verfahren werden die antreibbaren Räder unterschiedlicher Achsen von Übersetzungsgetrieben mit unterschiedlichen Übersetzungen angetrieben. Bei sinkendem Lastbedarf wird der Antrieb der Achse mit der größten Übersetzung abgekoppelt und bei weiter sinkender Lastanforderung mit den verbleibenden antreibenden Achsen analog verfahren, bis im Extremfall die gesamte Antriebsleistung von der Achse mit der kleinsten Übersetzung übertragen wird. Nachteilgerweise sind hierbei mehrere Achsen für eine feine Abstufung der auf den Untergrund zu übertragenden Leistung erforderlich.

Um hohe Momente und große Fahrgeschwindigkeiten zu erreichen, müssen möglichst viele Achsen mit möglichst fein gegeneinander abgestuften Übersetzungsgetrieben in dem Fahrzeug eingesetzt werden. Dadurch steigen Komplexitäten und Kosten des Antriebs und das Fahrzeug kann aufgrund hoher Achszahlen in manchen Anwendungsbereichen nicht eingesetzt werden.

Der Erfindung liegt das technische Problem zugrunde, ein Verfahren zum hydrostatischen Antreiben eines Fahrzeugs der eingangs genannten Gattung zu schaffen, mit dem das Fahrzeug bei unterschiedlichen Leistungsanforderungen verwendbar ist und einfach und kostengünstig herzustellen und zu betreiben ist.

Dieses technische Problem wird erfindungsgemäß dadurch gelöst, daß die antreibbaren Räder vor Erreichen einer ersten Grenzlast mit einer gleichen ersten Übersetzung der Übersetzungsgetriebe angetrieben werden, bei Erreichen der ersten Grenzlast die effektive Antriebsleistung der Räder von wenigstens einer idellen Achse vermindert wird und bei Erreichen einer zweiten Grenzlast die Übersetzung der Übersetzungsgetriebe geändert wird, und die vor der ersten Grenzlast angetriebenen Räder mit gleicher Übersetzung angetrieben werden.

Durch das anfängliche Antreiben der Räder mit einer gleichen ersten Übersetzung übertragen alle Räder zu Beginn den gleichen Leistungsanteil auf den Boden. Dadurch ist bei höchster Lastanforderung, zum Beispiel beim Anfahren, maximale Antriebsleistung gleichmäßig auf den Untergrund übertragbar, so daß das Fahrzeug schlupfsicher beschleunigbar ist. Ist bei dieser ersten Übersetzung beispielsweise eine gewünschte Geschwindigkeit erreicht, so kann durch das Vermindern des effektiven Antriebs von wenigstens einer ideellen Achse eine höhere Geschwindigkeit erreicht werden, wobei über die unvermindert angetriebenen Räder nach wie vor ein hohes Moment mit der ersten Übersetzung auf den Untergrund übertragbar ist. Dadurch wird auch in diesem Zustand das Fahrzeug mit großer Vortriebskraft angetrieben. Ist beispielsweise eine zweite Geschwindigkeit erreicht, so kann durch Ändern der Übersetzung der Übersetzungsgetriebe und Antreiben aller antreibbaren Räder gleichmäßig, die Geschwindigkeit weiter gesteigert werden, wobei das Fahrzeug jetzt wieder von mehr Achsen als vor dem Erreichen der zweiten Grenzlast angetrieben wird. Dadurch ist wieder eine hohe Leistung über mehrere Achsen schlupfsicher auf den Boden übertragbar. Die Übersetzung der Übersetzungsgetriebe kann bei Erreichen der zweiten Grenzlast beispielsweise vermindert werden, so daß die höhere Geschwindigkeit erreichbar ist. Dieses Verfahren kann je nach Änderungsvermögen der Übersetzung der Übersetzungsgetriebe ein- oder mehrfach wiederholt werden, so daß unterschiedlichste Momente differenzierter Abstimmung auf den Untergrund wahlweise mit einachsigem oder mehrachsigem Antrieb übertragbar ist.

Dabei können erste und zweite Grenzlast sowohl durch äußere auf das Fahrzeug einwirkende Lasten als auch durch innerhalb einer Fahrzeugsteuerung oder -regelung festgelegte Grenzwerte bestimmt werden. Als Grenzlastwerte sind beispielsweise ein höherer Geschwindigkeitsbedarf oder höhere Momentenlastanforderungen denkbar. In Analogie zum o.g. Beschleunigen eines Fahrzeugs kann die erfindungsgemäße Lösung auch beim Verzögern des Fahrzeugs, beispielsweise durch stufenweises Herunterschalten, angewandt werden.

Mit dem erfindungsgemäßen Verfahren können Fahrgeschwindigkeiten bis über 70 km/h erreicht werden, so daß der Antrieb überland- und autobahntauglich ist. Gleichsam ist er sehr gut für den Einsatz in unwegsamen Gelände tauglich.

Darüber hinaus ist der Betrieb nach dem ersten Fahrzustand mit vermindertem effektiven Antrieb der Räder wenigstens einer ideellen Achse energie- und kraftstoffsparend und es können bei gleicher Übersetzung höhere Geschwindigkeiten erreicht werden als mit dem Antrieb aller antreibbaren Räder. Dies ist insbesondere günstig bei Bodenverhältnissen, bei denen beispielsweise der gleiche mehrachsige Antrieb nicht erforderlich oder ungünstig ist.

Mit der erfindungsgemäßen Lösung können Fahrzeuge große Vortriebskräfte erzeugen und Steigungen über 60 % bewältigen. Selbst Anfahren aus dem Stillstand ist bei diesen Steigungen möglich.

Besonders vorteilhaft wird der effektive Antrieb eines angetriebenen Rades durch senken des Verdrändungsvolumen des Hydromotors vermindert. Dadurch läßt sich der Antrieb eines Rades kontinuierlich senken, ohne die von der Hydraulikquelle aufgebrachte Leistung zu verändern. Der Leistungsausgleich mit anderen angetriebenen Rädern geschieht automatisch und ruckfrei. Das Verdrängungsvolumen ist dabei die Summe sämtlicher maximaler Volumenänderungen der Druckkammern, die durch die Bewegung der Verdrängungselemente während einer Wellenumdrehung oder eines Doppelhupes entstehen. Bei Hydromotoren ist dieser Begriff gleichbedeutend mit dem Schluckvermögen bzw. bei Hydropumpen ist der Begriff gleichbedeutend mit dem Fördervolumen. Bei Verwendung von Axialkolbenmaschinen als Hydromotoren ist das Verdrängungsvolumen beispielsweise durch Verstellen des Schwenkwinkels veränderbar.

Günstigerweise werden beim Ändern der Übersetzung der Übersetzungsgetriebe die Verdrängungsvolumen der Hydromotoren im wesentlichen auf Null gestellt. Dadurch wird ein lastfreies Ändern oder Schalten der Übersetzungsgetriebe ermöglicht.

In besonderer Weise können die Übersetzungsgetriebe in Stufen geschaltet werden.

Es wird vorgeschlagen, die Übersetzung der Übersetzungsgetriebe von i=41 auf i=6,6 zu vermindern. Dabei hat sich die höhere Übersetzungsstufe i=41 als besonders günstig für eine große Vortriebskraft in unwegsamen Gelände oder bei extremen Steigungen erwiesen und die kleinere Übersetzungsstufe i=6,6 ist vorteilhaft für das Erreichen von hohen Geschwindigkeiten sowohl in Allradantrieb als auch nur einer angetriebenen ideellen Achse. Mit der kleineren Übersetzungsstufe i=6,6 sind bei zweiachsigen Fahrzeugen sowohl bei Allradantrieb als auch bei nur einer angetriebenen Achse gewünschte Höchstgeschwindigkeiten von über 70 km/h erreichbar. Diese Übersetzungsstufen sind beispielsweise sehr gut abgestimmt für Bau- und Kranfahrzeuge. Beide der Übersetzungsstufen passen für eine erfindungsgemäße Lösung besonders gut zusammen, wobei sie einen großen Fahrgeschwindigkeits- als auch Momentenlastbereich gleichmäßig abdecken. Unter Übersetzung i ist das Verhältnis von Eingangsdrehzahl zur Ausgangsdrehzahl bzw. von Ausgangsmoment zu Eingangsmoment zu verstehen.

Günstigerweise wird die Übersetzung des Übersetzungsgetriebes von i=12 auf i=3 geändert. Diese Übersetzungsstufen sind mit den zuvor genannten Vorteilen sehr geeignet für leichte Geländefahrzeuge, inbesondere mit Gewicht bis zu 2 t.

Vorteilhafterweise wird die Übersetzung der Übersetzungsgetriebes von i=24 auf i=4 geändert. Unter Wahrung der zuvor genannten Vorteile eignen sich diese Übersetzungsstufen besonders gut für das Antreiben von Fahrzeugen bis zu 10 t Gewicht.

Als Variante der Erfindung ist das Verdrängungsvolumen der als Hydropumpe ausgeführten und von einem Antriebsmotor angetriebenen Hydraulikquelle bei Leerlauf des Antriebsmotors im wesentlichen gleich Null und wird bei Erhöhung der Antriebsmotordrehzahl vergrößert. Dadurch ist der Antrieb bei Leerlauf des Antriebsmotors entlastet. Bei Erhöhung der Antriebsmotordrehzahl, beispielsweise durch Drücken eines Gaspedals, wird die Leistung auf die Hydromotoren und die Räder übertragen wird. Dabei kann das Verdrängungsvolumen der Hydropumpe bis auf das Maximum vergrößert werden, um maximale Vortriebsleistung des Fahrzeuges zu erreichen.

In bevorzugter Ausführungsform wird die Fahrtrichtung durch Reversieren der Hydropumpe umgekehrt. Dadurch ist die Fahrtrichtung durch einen einfachen Umstellvorgang an einem Bauteil, nämlich der Hydropumpe, umkehrbar.

Vorzugsweise werden die Hydromotoren stromlos auf Verdrängungsvolumen Null gestellt.

In besonderer Weise können die Hydromotoren zum Beschleunigen wenigstens anfänglich auf maximales Verdrängungsvolumen gestellt werden. Dadurch kann maximale Momentenkraft des Rades als Antriebskraft auf den Untergrund übertragen werden, so daß das Fahrzeug maximale Vortriebskraft erfährt. Dadurch werden höchste Lastanforderungen von dem Antrieb bewältigt. Sind die höchsten Lastkräfte überwunden, so kann das Verdrängungsvolumen wieder gesenkt werden.

Vorzugsweise wird beim Beschleunigen das Verdrängungsvolumen der Hydromotoren verringert, wenn die Hydropumpe maximales Verdrängungsvolumen erreicht hat. Dadurch ist nach einem maximalen Anfahrmoment die Antriebskraft kontinuierlich reduzierbar.

Besonders vorteilhaft wird das Verdrängungsvolumen eines angetriebenen Hydromotores relativ niedriger eingestellt als sein sollwertiger Anteil am Hydropumpenvolumen. Dadurch wird die von der Hydropumpe abgegebene Leistung nicht durch die Verdrängungsvolumina der Hydromotoren aufgenommen, so daß sich zwischen jedem Hydromotor und der Hydropumpe ein erhöhter Druck einstellt. Dieser ist höher, als zu einer Konstantfahrt notwendig wäre, so daß das Überschußmoment am Rad beispielsweise für die Beschleunigung des Fahrzeugs zur Verfügung steht.

Es wird vorgeschlagen, bei Erreichen einer gewünschten Fahrgeschwindigkeit die Drehzahl des Antriebsmotors durch Ändern der Verdrängungsvolumen von Hydromotoren und/oder Hydropumpe auf eine gewünschte Größe zu regeln. Dadurch kann der Antriebsmotor im Bereich der optimalen Einspritzung arbeiten, das heißt, er läuft bei bester Ausnützung des Kraftstoffes und optimaler Abgaszusammensetzung. Die gewünschte Solldrehzahl kann beispielsweise in der Fahrelektronik gespeichert sein und durch Regeln von Hydromotoren und/oder Hydropumpe angestrebt werden.

Vorzugsweise wird zum Bremsen eine im wesentlichen verschleißfreie Dauerbremse aktiviert. Dadurch werden die verschleißbehafteten Betriebsbremsen des Fahrzeugs entlastet. Dies ist beispielsweise besonders günstig bei längerer Bergabfahrt, bei der die Dauerbremse einen wesentlichen Anteil der Bremsleistung übernimmt. Als verschleißfreie Dauerbremse ist beispielsweise ein leistungsabnehmender Zusatzstromkreis denkbar.

Zweckmäßiger Weise kann zum Verändern der Bremswirkung der Dauerbremse das Verdrängungsvolumen einer verstellbaren, an den Antriebsmotor gekoppelten Zusatzhydropumpe verändert werden. Dadurch ist die Bremswirkung der Dauerbremse stufenlos veränderbar. Die Zusatzhydropumpe fördert beispielsweise in eine Zusatzstromleitung, in der die von der Zusatzhydropumpe übertragene Leistung abgenommen wird. Zusatzhydropumpe und Zusatzstromleitung sind dabei im wesentlichen verschleißfrei.

Vorzugsweise wird zum Verändern der Bremswirkung der Dauerbremse ein Druckbegrenzungsventil in einer Zusatzstromleitung, in die die Zusatzhydropumpe hineinfördert, verstellt. Das Druckbegrenzungsventil ist einfach, beispielsweise über die Fahrelektronik, verstellbar; die Verstellung bewirkt eine geänderte Leistungsabnahme in der Zusatzstromleitung, so daß diese unterschiedliche Fahrwiderstände dem Antriebsmotor simulieren kann.

In besonderer Weise kann der von der Zusatzhydropumpe geförderte Strom beim Fahren in die Zusatzstromleitung gelenkt wird und im Arbeitsbetrieb in einen Arbeitsstromkreis gelenkt wird. Dadurch kann die als Hydraulikquelle wirkende Zusatzhydropumpe des Arbeitsstromkreises gleichzeitig als Dauerbremse während des Fahrens genutzt werden.

In bevorzugter Ausführungsform wird bei Schlupf eines angetriebenen Rades das Verdrängungsvolumen wenigstens des dieses Rad antreibenden Hydromotors reduziert. Über die Verringerung des Verdrängungsvolumens wird das jeweilige auf den Boden übertragene Moment reduziert, im Extremfall wird das Verdrängungsvolumen des Hydromotors auf Null gestellt.

Dies ist insbesondere günstig für eine Antriebsschlupfregelung des Fahrzeugs. Falls das einem Rad übertragene Antriebsmoment nicht mehr auf den Untergrund übertragen werden kann und einzelne Räder teilweise oder vollständig durchdrehen (positiver Schlupf) wird über das Verdrängungsvolumen des Hydromotors das jeweilige Antriebsmoment reduziert, bis das Rad nicht mehr zum Durchdrehen neigt. Damit bleibt insbesondere beim Beschleunigen des Fahrzeuges die Spurstabilität erhalten.

Günstig ist dieses Verfahren auch beim Verzögern des Fahrzeugs durch Ausnützen des Schleppmoments des Antriebsmotors. Ist das Antriebsschleppmoment so groß, daß ein Rad auf dem Untergrund zum blockieren neigt (negativer Schlupf), so wird das Verdrängungsvolumen des zugehörigen Hydromotors so weit vermindert, daß der Antriebsmotor gedrückt wird und seine Drehzahl sinkt. Im Extremfall wird das Verdrängungsvolumen des Hydromotors vollständig auf Null gestellt, das heißt kein Drehmoment am Rad, und der Antriebsmotor läuft im Leerlauf. Dabei können wahlweise alle Hydromotoren verstellt werden oder nur der Hydromotor des zum blockieren neigenden Rades.

Als Schlupf ist dabei das Verhältnis der Differenz von Radumfangsgeschwindigkeit und effektiver Fahrzeuggeschwindigkeit zur Radumfangsgeschwindigkeit definiert.

Vorzugsweise wird aus den Drehzahlen der angetriebenen Räder ein Referenzwert gebildet, die Drehzahl jedes angetriebenen Rades mit dem Referenzwert verglichen und in Abhängigkeit der Abweichung einer Drehzahl eines angetriebenen Rades vom Referenzwert das Verdrängungsvolumen des Hydromotors dieses Rades verändert. Durch dieses Verfahren läßt sich beispielsweise über die Fahrelektronik einfach der Schlupf eines Rades feststellen. Das Blockieren der Räder und das Druchdrehen der Räder wird rechnerisch festgestellt und danach das Verdrängungsvolumen des Hydromotors verändert, um den Schlupf zu vermindern. Als Referenzwert kann beispielsweise der arithmetische Mittelwert verwendet werden.

Zweckmäßigerweise kann beim Bremsen mit Antiblockiersystem die Dauerbremse abgeschaltet werden. Dadurch entwickelt die Dauerbremse keine Bremswirkung mehr auf die Antriebsräder, so daß das Antiblockiersystem in seiner Wirkung nicht beeinträchtigt wird.

Als Variante der Erfindung wird beim Bremsen mit Antiblockiersystem der Antriebsmotor auf Leerlauf gestellt. Dies reduziert die Bremswirkung durch das Motorschleppmoment auf die Räder, so daß das Antiblockiersystem in seiner Wirkung unbeeinträchtigt bleibt.

Vorzugsweise werden beim Bremsen mit Antiblockiersystem die Verdrängungsvolumina von Hydropumpe und/oder Hydromotoren der angetriebenen Räder auf Null gestellt. Dadurch wird die auf die Räder übertragene Antriebskraft von Hydropumpe und/oder Hydromotoren minimiert, so daß das Antiblockiersystem in seiner Wirkung unbeeinträchtigt bleibt.

Denkbarerweise wird einer Fahrgeschwindigkeit ein Verdrängungsvolumen der Hydromotoren zugeordnet. Dadurch werden Regelkreise zur Feststellung der Hydromotoren eingespart, die Steuerung der Fahrzustände geschieht vorwiegend über den Antriebsmotor, beispielsweise durch Verstellen des Gaspedals durch eine Bedienperson, und gegebenenfalls durch Verstellen des Verdrängungsvolumens der Hydropumpe.

Das erfindungsgemäße Verfahren kann mit einem hydrostatischen Antrieb mit wenigstens zwei ideellen Achsen durchgeführt werden, die jeweils wenigstens ein antreibbares Rad aufweisen, wobei jedes antreibbare Rad mit wenigstens einem mit wenigstens einer Hydraulikquelle verbundenen Hydromotor verbunden ist und zwischen jedem Hydromotor und dem zugehörigen Rad ein Übersetzungsgetriebe angeordnet ist und die Übersetzung des Übersetzungsgetriebes veränderbar ist.

Das Übersetzungsgetriebe weist bevorzugt schaltbare Übersetzungsstufen auf. Dadurch können im Zusammenspiel mit den verstellbaren Hydromotoren bzw. der Hydraulikquelle verschiedene Bereiche festgelegt werden, die bei einer festen Übersetzungsstufe von den Verstellmöglichkeiten der Hydromotoren bzw. -quelle abgedeckt werden. Diese Bereiche können sich durch entsprechende Wahl der Schaltstufen aneinander anschließen oder zumindest bereichsweise überdecken.

Günstigerweise beträgt die kleinste Übersetzung i=6,6. Diese Übersetzung hat sich als günstig herausgestellt, um beispielsweise mit einem Krahnfahrzeug mit einem herkömmlichen Antriebsmotor Geschwindigkeiten über 70 km/h zu erreichen, die das Fahrzeug autobahntauglich machen.

Möglicherweise beträgt die größte Übersetzung i=41. Damit läßt sich eine hohe Vortriebskraft mit herkömmlichem Antriebsmotor und Hydraulikquelle erzeugen, die Steigungen im Bereich von 60 % sogar aus dem Stillstand bewältig.

In besonderer Weise beträgt eine größere Übersetzung i=12 und eine kleine Übersetzung i=3. Diese Übersetzungsstufen sind günstig für leichte Geländefahrzeuge, insbesondere bis zu 2 t Gewicht.

Als Variante beträgt eine größere Übersetzung i=24 und eine kleinere Übersetzung i=4. Diese Übersetzungskombination ist insbesondere günstig für Fahrzeuge bis zu 10 t Gewicht.

Vorzugsweise ist das Übersetzungsgetriebe vollständig in die Radnabe integriert. Dadurch läßt sich das Übersetzungsgetriebe platzsparend in der Radnabe unterbringen, so daß der Raum zwischen den einzelnen Räder bzw. ideellen Achsen für tragende Fahrzeugteile oder andere Fahrzeugagregate genutzt werden kann.

Zweckmäßigerweise kann das Übersetzungsgetriebe ein zweistufiges Planetengetriebe sein. Dieses Getriebe baut sehr klein und kompakt und kann in dieser Bauweise Übersetzungsstufen unterschiedlichster Kombinationen und Größen verwirklichen. Zudem eignet sich ein Planetengetriebe besonders gut als Radnabenantrieb.

In bevorzugter Weise weist das Übersetzungsgetriebe eine schaltbare Leerlaufstellung auf. Dadurch können die Räder von dem übrigen Antrieb vollkommen getrennt werden, so daß ein momentenfreier Radzustand unabhängig vom Betriebszustand des übrigen Antriebs schaltbar ist. Insbesondere erweist sich dies günstig bei einem Antiblockiersystem, einer Antischlupfregelung oder einer Antriebsmotorschleppmomentregelung.

Als Variante weist das Übersetzungsgetriebe eine schaltbare Blockierstellung auf. Dadurch kann unabhängig von zusätzlichen Bremsvorrichtungen das Fahrzeug nur durch Schalten des Übersetzungsgetriebes gebremst werden. Im Fahrzeugstillstand ist die Blockierstellung als Feststellbremse einsetzbar.

In besonderer Weise kann das Übersetzungsgetriebe zum Verändern der Übersetzung bzw. Schalten mit hydrostatischen Betätigungsmitteln versehen sein. Die hydrostatischen Betätigungsmittel können an den hydrostatischen Fahrantrieb gekoppelt sein oder über eine eigene hydrostatische Energiequelle verfügen.

Günstigerweise ist die Hydroquelle über ein Verteilergetriebe mit einem Antriebsmotor verbunden. Der Antriebsmotor treibt die Hydroquelle, die beispielsweise als Hydropumpe ausgeführt sein kann an, wobei die vom Antriebsmotor übertragene Leistung von dem Verteilergetriebe in die gewünschten Größen vor der Hydroquelle umgeformt wird.

In besonderer Weise kann das Verteilergetriebe mit mindestens einem Zusatzverbraucher verbunden sein. Dadurch kann der Antriebsmotor neben der Funktion als Fahrantrieb beispielsweise auch als Antrieb für ein Arbeitsgerät dienen.

Möglicherweise fördert als Zusatzverbraucher eine verstellbare Hydropumpe wahlweise in einen Arbeitsstromkreis oder in eine als im wesentlichen verschleißfreie Dauerbremse wirkende Zusatzstromleitung hinein. Dabei kann die verstellbare Hydropumpe als Hydraulikquelle ein Arbeitsgerät antreiben oder beispielsweise im Fahrbetrieb durch eine leistungsabnehmende Zusatzstromleitung belastend auf den Antriebsmotor wirken. Die Belastung durch die Zusatzstromleitung bremst den Antriebsmotor, der wiederum bremsend durch sein Schleppmoment auf den Fahrantrieb wirkt. Dies entlastet beispielsweise bei ständiger Bergabfahrt wesentlich die Betriebsbremse des Fahrzeugs.

Zweckmäßigerweise kann das Verteilergetriebe mit einer Speisepumpe des Fahrstromkreises verbunden sein. Dadurch wird automatisch bei laufendem Antriebsmotor über die Speisepumpe ständig der Fahrstromkreis mit ausreichender Hydraulikflüssigkeit versorgt.

Vorzugsweise versorgt die Speisepumpe einen Richtungsschaltkreis der Hydraulikquelle. Dadurch ist gewährleistet, daß bei laufendem Antriebsmotor die Hydraulikquelle ständig schaltbar ist. Über den Richtungsschaltkreis kann die Fahrtrichtung eines Fahrzeugs verändert werden.

Ausführungsbeispiele der Erfindung werden nachstehend erläutert.

Es zeigen:
- Fig. 1: einen schematischen Schaltplan eines hydrostatischen Antriebs für ein zweiachsiges Fahrzeug,
- Fig. 2: einen schematischen Schaltplan eines hydrostatischen Antriebs für ein zweiachsiges Fahrzeug mit Reversierschaltung der Hydraulikquelle und verschleißfreier Dauerbremse,
- Fig. 3: einen ersten Halbschnitt eines zweistufigen Planetengetriebes mit dargestellten Planeten und
- Fig. 4: einen zweiten Halbschnitt eines zweistufigen Planetengetriebes.

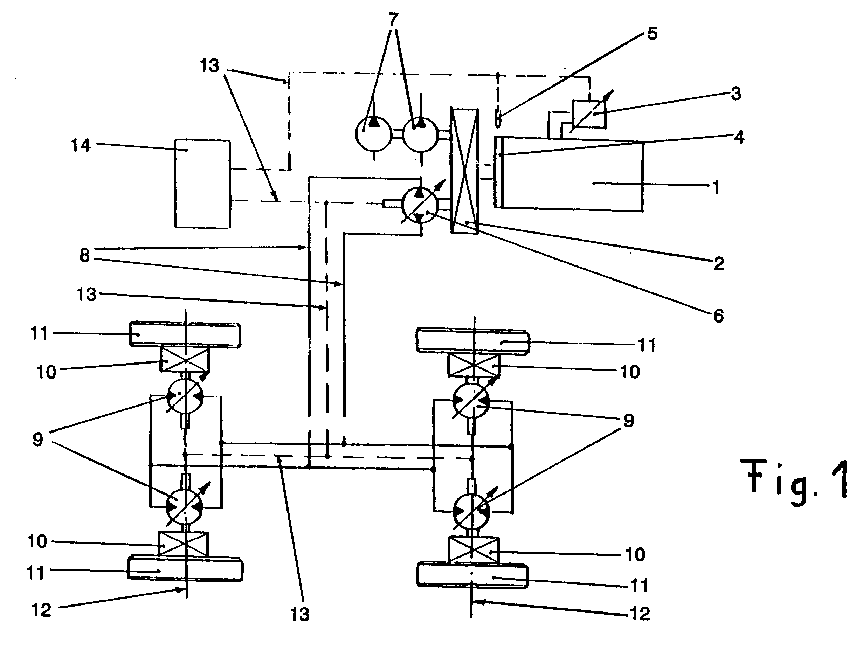

In Figur 1 ist ein Antriebsmotor 1, der mit einem Verteilergetrieb 2 verbunden ist, dargestellt. Der Antriebsmotor 1 ist mit einem Fahrpedal 3 verbunden. Er weist einen Anlasserdrehkranz 4 auf, auf den ein Drehzahlmesser 5 gerichtet ist.

Das Verteilergetriebe 2 ist an einem Antriebsstrang mit einer verstellbaren Hydropumpe 6 mit zwei Stromrichtungen verbunden und an einem zweiten Antriebsstrang mit zwei hintereinandergeschalteten Zusatzhydropumpen mit konstantem Verdrängungsvolumen und einer Stromrichtung verbunden. Die Hydropumpe 6 ist über Hydraulikleitungen 8 mit insgesamt vier Hydromotoren 9 mit veränderlichem Verdrängungsvolumen und zwei Stromrichtungen verbunden. Jeder Hydromotor 9 ist über ein veränderbares Übersetzungsgetriebe 10 an ein Rad 11 gekoppelt. Jeweils zwei Räder 11 befinden sich auf einer ideellen Achse 12. Die Hydromotoren 9 jeweils einer ideellen Achse 12 sind zu denen der anderen ideellen Achse 12 parallel geschaltet und die Hydromotoren 9 derselben ideellen Achse 12 sind wiederum zueinander parallel geschaltet. Jedes Rad 11 ist über jeweils einen Hydromotor 9 einzeln angetrieben.

Die Hydromotoren 9, die Hydropumpe 6, der Drehzahlmesser 5 und das Fahrpedal 3 sind über Steuerleitungen 13 mit einer Steuereinheit 14 verbunden.

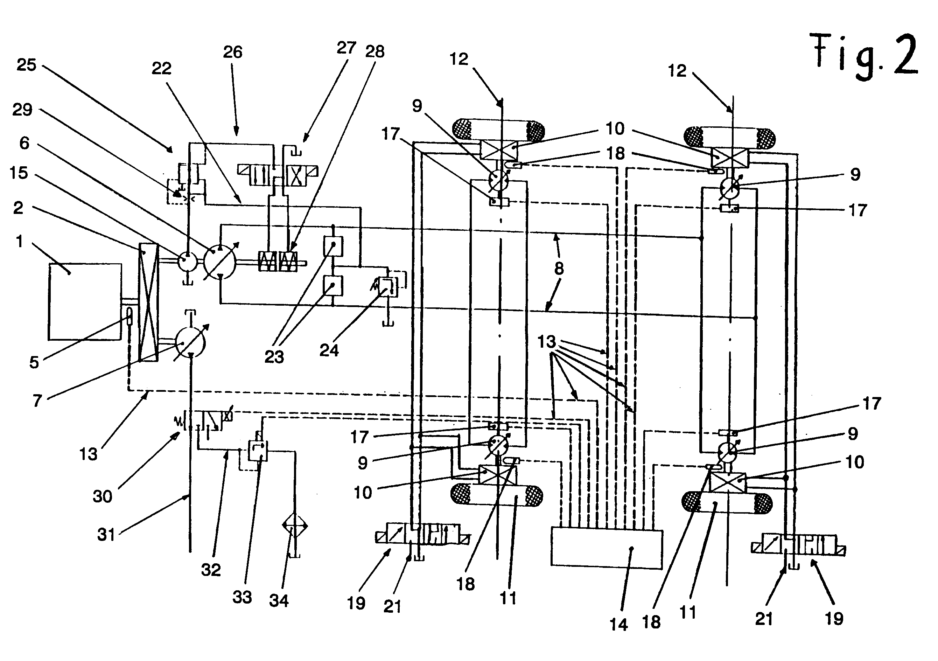

In der Figur 2 ist der Antriebsmotor 1 ebenfalls mit dem Verteilergetriebe 2 verbunden, wobei ein über eine Steuerleitung 13 mit einer Steuereinheit 14 verbundener Drehzahlmesser 5 die Antriebsdrehzahl des Antriebsmotors 1 erfaßt. Das Verteilergetriebe 2 ist in einem ersten Antriebsstrang mit einer Speisepumpe 15 und der als Hydraulikquelle wirkenden Hydropumpe 6 verbunden. Speisepumpe 15 und Hydropumpe 6 sind in Reihe geschaltet.

Die Hydropumpe 6 mit verstellbarem Verdrängungsvolumen und zwei Stromrichtungen ist über Hydraulikleitungen 8 mit vier Hydromotoren 9 verbunden, die jeweils über ein Übersetzungsgetriebe 10 mit einem Rad 11 verbunden sind. Jeweils zwei Räder 11 befinden sich auf einer ideellen Achse 12. Die Hydromotoren 9 zweier ideeller Achsen 12 sind zueinander parallel geschaltet und die Hydromotoren 9 der selben ideellen Achse 12 sind zueinander ebenfalls parallel geschaltet. Die Hydromotoren 9 haben jeweils verstellbares Verdrängungsvolumen und zwei Stromrichtungen.

Jeder Hydromotor 9 ist mit einer Verstelleinheit 17 zum Verstellen des Verdrängungsvolumens verbunden. Die Verstelleinheiten 17 sind über Steuerleitungen 13 mit der Steuereinheit 14 verbunden. Zwischen Übersetzungsgetriebe 10 und Hydromotor 9 ist jeweils ein Abtriebsdrehzahlmesser 18 angeordnet, der über eine Steuerleitung 13 mit der Steuereinheit 14 verbunden ist.

Die Übersetzungsgetriebe 10 einer ideellen Achse 12 sind über Hydraulikleitungen 8 mit einem elektromagnetisch verstellbaren 4/4-Wegeventil 19 verbunden, über das die verschiedenen Übersetzungen des Übersetzungsgetriebes 10 schaltbar sind. Auf der Zufuhrseite weist jedes 4/4-Wegeventil 19 eine Behälterzuleitung 20 und eine Pumpenzuleitung 21 auf.

Der von der Speisepumpe 15 erzeugte Volumenstrom wird zum einen über eine Speiseleitung 22 und jeweils ein Rückschlagventil 23 in die zuführende bzw. abführende Hydraulikleitung 8 der Hydropumpe 6 geführt. Ein federbelastetes, stufenlos verstellbares Druckbegrenzungsventil 24 ist mit der Speiseleitung 22 verbunden.

Des weiteren ist die Speisepumpe 15 über ein Verhältnisdruckregelventil 25 mit einem Richtungsschaltkreis 26 verbunden. An das Verhältnisdruckregelventil 25 schließt sich in Richtung des Schaltkreises 26 ein elektromagnetisch verstellbares 4/3-Richtungsschaltventil an, das einen doppelt wirkenden, zweifach federbelasteten Zylinder 28 betätigt. Der Zylinder 28 ist mechanisch mit der Hydropumpe 6 verbunden und steuert das Verdrängungsvolumen und die Stromrichtung der Hydropumpe 6. An das Verhältnisdruckregelventil 25 ist eine Differenzdruckmeßblende 29 angeschlossen.

An den zweiten Antriebsstrang des Verteilergetriebes 2 ist eine stufenlos verstellbare Zusatzhydropumpe 7 mit einer Stromrichtung angeordnet. Die Zusatzhydropumpe 7 fördert über ein 3/2-Wegeventil 30 wahlweise in einen Arbeitskreisstromkreis 31 oder eine Zusatzstromleitung 32 hinein. An der Zusatzstromleitung 32 ist ein elektromagnetisch verstellbares Druckbegrenzungsventil 33 und ein Kühler 34 angeordnet. Das elektromagnetisch verstellbare Druckbegrenzungsventil 33 ist über eine Steuerleitung 13 mit der Steuereinheit 14 verbunden.

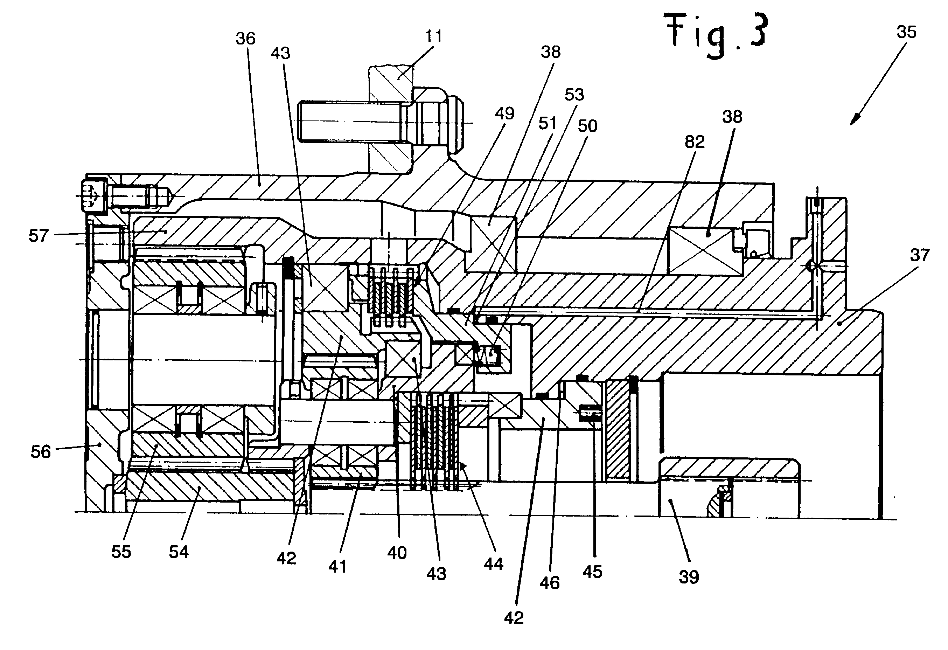

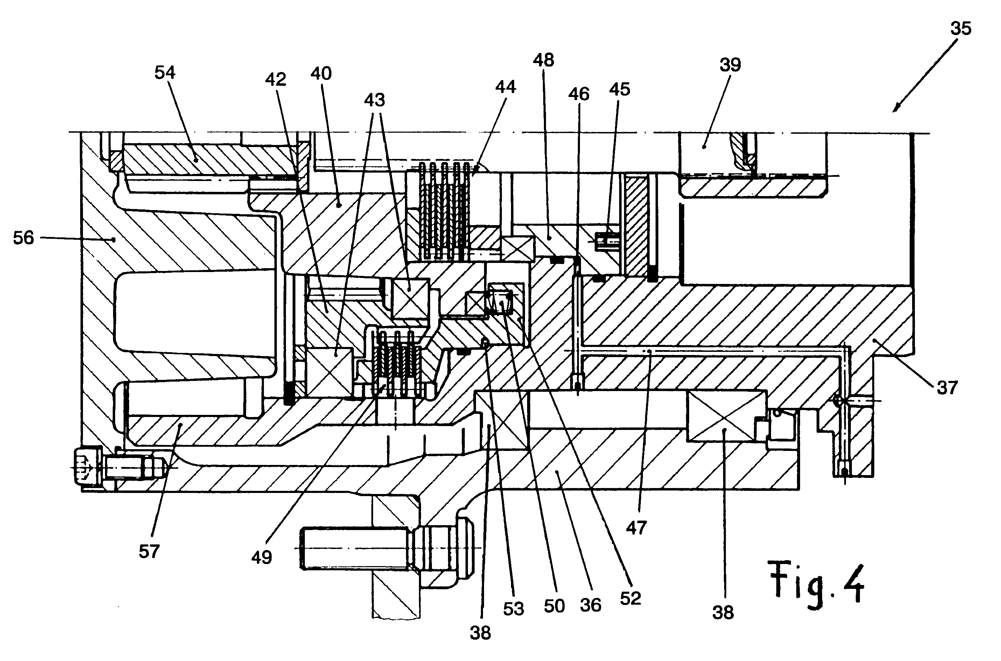

In den Figuren 3 und 4 ist jeweils in einem Halbschnitt ein zweistufiges Planetengetriebe 35 dargestellt. Das Planetengetriebe 35 ist als integriertes Radnabengetriebe ausgeführt und weist außenseitig einen Radträger 36 auf, an dem ein Rad 11 befestigbar ist. Fahrzeugseitig ist das Planetengetriebe 35 über das Nabenteil 37 fest mit einem Fahrzeugteil verbunden. Der Radträger 36 ist über erste Wälzlager 38 drehbar auf dem Nabenteil 37 gelagert. Zentrisch in dem Nabenteil 37 ist eine Antriebswelle 39 angeordnet, die an ihrem einen Ende außenverzahnt ist.

Die Antriebswelle 39 dient als Sonne einer ersten Planetenstufe mit einem ersten Planetenträger 40, auf dem ein erster Planet 41 drehbar gelagert ist. Der erste Planet 41 greift innenseitig in die Antriebswelle 39 ein und außenseitig in ein erstes Hohlrad 42 ein. Das erste Hohlrad 42 ist über zweite Wälzlager 43 innenseitig gegen den ersten Planetenträger 40 und außenseitig gegen das Nabenteil 37 drehbar gelagert.

Zwischen erstem Planetenträger 40 und Antriebswelle 39 ist eine erste Lamellenkupplung 44 angeordnet. Die erste Lamellenkupplung 44 ist von einer ersten Feder 45 belastet und deshalb geschlossen. Bei geschlossener ersten Lamellenkupplung 44 sind Antriebswelle 39, erster Planetenträger 40 und erster Planet 41 fest miteinander verbunden.

Eine erste Betätigungskammer 46 ist über eine erste Leitung 47, die durch das Nabenteil 37 verläuft, mit Druck beaufschlagbar, so daß über ein erstes Zwischenteil 48 der ersten Feder 45 entgegengewirkt werden kann und die erste Lamellenkupplung 44 entlastet, das heißt geöffnet werden kann. In diesem Fall sind erster Planet 41, Planetenträger 40 und Antriebswelle 39 gegeneinander beweglich.

Zwischen erstem Hohlrad 42 und Nabenteil 37 ist eine zweite Lamellenkupplung 49 angeordnet. Über eine zweite Feder 50 und ein zweites Zwischenteil 51 ist die zweite Lamellenkupplung 49 entlastet, so daß erstes Hohlrad 42 und Nabenteil 37 gegeneinander drehbar sind. Über eine zweite Leitung 52 ist eine zweite Betätigungskammer 53 mit Druck beaufschlagbar, so daß der zweiten Feder 50 entgegengewirkt und die zweite Lamellenkupplung 49 geschlossen werden kann. In diesem Fall sind erstes Hohlrad 42 und das Nabenteil 37 drehfest miteinander verbunden.

Der erste Planetenträger 40 ist mit einer in Verlängerung der Antriebswelle 39 angeordneten Sonnenwelle 54 verzahnt. Die Sonnenwelle 54 ist mit einem zweiten Planeten 55 im Eingriff, der drehbar an einem zweiten Planetenträger 56 gelagert ist. Der zweite Planetenträger 56 ist mit dem Radträger 36 fest verbunden. Der zweite Planet 55 greift außenseitig in ein am Nabenteil 37 ausgebildetes zweites Hohlrad 57 ein.

Die erste Lamellenkupplung 44 ist mit 1,8-facher Sicherheit und die zweite Lamellenkupplung 49 ist mit 1,5-facher Sicherheit ausgelegt.

Im Folgenden wird die Funktions- und Wirkungsweise des in der Zeichnung dargestellten zweistufigen Planetengetriebes näher erläutert.

Die Antriebswelle 39 wird beispielsweise von einem Hydromotor 9 angetrieben, wobei zunächst die erste und zweite Betätigungskammer 46, 53 drucklos sind. Demzufolge ist die erste Lamellenkupplung 44 geschlossen und die zweite Lamellenkupplung 49 offen. Antriebswelle 39, erster Planetenträger 40, erster Planet 41, erstes Hohlrad 42 und Sonnenwelle 44 sind drehfest miteinander verbunden. Das Antriebsdrehmoment wird nur über den zweiten Planeten 55, der sich an dem feststehenden zweiten Hohlrad 57 abstützt, auf den zweiten Planetenträger 56 übertragen. Dieser überträgt das Drehmoment unverändert über den Radträger 36 auf ein anzutreibendes Rad 11. In diesem Fall beträgt eine erste Übersetzung beispielsweise i=6,6.

In einen zweiten Schaltzustand sind beide Betätigungskammern 46, 53 mit Druck beaufschlagt, so daß die erste Lamellenkupplung 44 geöffnet und die zweite Lamellenkupplung 49 geschlossen ist. Demnach ist das erste Hohlrad 42 drehfest mit dem feststehenden Nabenteil 37 verbunden und ein von der Antriebswelle 39 geliefertes Drehmoment wird über den ersten Planeten 41, der sich am ersten Hohlrad 42 abstützt über den ersten Planetenträger 40 auf die Sonnenwelle 54 übertragen, die wiederum die Antriebskraft auf den zweiten Planeten 55, der sich am zweiten Hohlrad 57 abstützt überträgt und die Kraft auf den zweiten Planetenträger 56 weiterleitet. In diesem Fall übertragen beide Planetenstufen in Reihe geschaltet das Antriebsdrehmoment auf den zweiten Planetenträger und auf ein anzutreibendes Rad 11. Die Übersetzung beträgt in diesem Fall beispielsweise i=41.

Ist die erste Betätigungskammer 46 drucklos und die zweite Betätigungskammer 53 mit Druck beaufschlagt, so sind beide Lamellenkupplungen 44, 49 geschlossen und alle Getriebeteile drehfest miteinander verbunden; das Planetengetriebe blockiert. Da die beiden Lamellenkupplungen 44, 49 jedoch mit unterschiedlicher Sicherheit ausgelegt sind, rutscht diejenige Lamellenkupplung mit geringerer Sicherheit, in diesem Fall die zweite Lamellenkupplung 49, bei sehr hoher Momentenbelastung gegen den eigenen Reibwiderstand durch. Dies schützt das Getriebe bei Blockierstellung vor Zerstörung durch zu hohe Momentenkräfte.

Ist die erste Betätigungskammer 46 mit Druck beaufschlagt und die zweite Betätigungskammer 53 drucklos, so sind beide Lamellenkupplungen 44, 49 geöffnet und das Planetengetriebe befindet sich in Leerlaufstellung; es wird kein Moment auf das Rad 11 übertragen.

Dieses zweistufige Planetengetriebe 35 ist als Übersetzungsgetriebe 10 in Schaltkreisen der Figur 1 und 2 einsetzbar.

Im Folgenden wird die Funktions- und Wirkungsweise der in den Figuren 1 und 2 dargestellten Schaltkreise eines hydrostatischen Antriebs näher erläutert.

Der beispielsweise als Dieselmotor ausgeführte Antriebsmotor 1 treibt über das Verteilergetriebe 2 die Hydropumpe 6 an. Das Verdrängungsvolumen der Hydropumpe 6 ist unabhängig von der Antriebsdrehzahl des Antriebsmotors 1, beispielsweise durch eine elektrisch proportionale Verstellung, verstellbar. Bei Leerlauf steht die Hydropumpe 6 in Nullstellung; bei Erhöhung der Antriebsdrehzahl durch das Fahrpedal 3 wird die Hydropumpe 6 automatisch ausgeschwenkt. Das Fahrzeug beschleunigt.

Radseitig stehen die Hydromotoren 9 stromlos auf Verdrängungsvolumen 0 und werden bei Start des Antriebsmotors 1 auf Maximum gestellt. In Abhängigkeit der Fahrgeschwindigkeit und der Antriebsmotordrehzahl verringern die Hydromotoren 9 ihr Verdrängungsvolumen und beschleunigen dadurch das Fahrzeug. Um einerseits hohe Antriebskräft, beispielsweise für eine Geländefahrt, und andererseits hohe Geschwindigkeiten, beispielsweise für Autobahnfahrten, zu erreichen, wird zusätzlich zu den Verstellbereichen von Hydropumpe 6 und Hydromotoren 9 die mechanische Übersetzung der Übersetzungsgetriebe 10 umgeschaltet. Die Hydromotoren 9 sind zum Zeitpunkt der Übersetzungsschaltung auf Verdrängungsvolumen 0 gestellt, um lastfrei zu schalten.

Dabei werden beim Anfahren die Übersetzungsgetriebe der antreibbaren Räder 11 auf eine hohe Übersetzungsstufe, beispielsweise i=41 geschaltet, und alle Hydromotoren 9 mit gleichem hohem Verdrängungsvolumen betrieben. Das Fahrzeug fährt mit permanentem Allradantrieb und dadurch maximaler Traktion an. Ist ein erster Fahrzustand, beispielsweise eine maximale Geschwindigkeit von ca. 13 km/h erreicht, so wird das Verdrängungsvolumen der Hydromotoren 9 einer ideellen Achse 12 stufenlos bis auf Null reduziert, so daß nur noch die verbleibenden ideelle Achse 12 antreibt. Mit den Hydromotoren 9 einer ideellen Achse 12 wird bis zum Erreichen eines zweiten Fahrzustandes, beispielsweise bis zu einer maximalen Fahrgeschwindigkeit von 26 km/h angetrieben.

Anschließend werden die Übersetzungsgetriebe 10 auf eine zweite, kleinere Übersetzungsstufe, beispielsweise i=6,6 umgeschaltet und es werden wieder die Hydromotoren 9 beider ideeller Achsen 12 mit gleichem Verdrängungsvolumen angetrieben. In dieser Schaltstellung ist eine Maximalgeschwindigkeit im Allradantrieb von ca. 75 km/h bei sehr guter Traktion erreichbar.

Für den Dauerbetrieb auf Straßen, beispielsweise zur Autobahnfahrt, wird wiederum das Verdrängungsvolumen der Hydromotoren 9 einer ideellen Achse 12 verringert und bis auf Null gestellt, so daß nunmehr die Hydromotoren einer ideellen Achse 12 antreiben. Dadurch wird bei einer Maximalgeschwindigkeit von bis zu 75 km/h ein sehr guter Wirkungsgrad mit guten Treibstoffverbraucherwerten erreicht.

Das Durchfahren dieser Fahrzustände kann je nach Anzahl der Übersetzungsstufen der Übersetzungsgetriebe 10 beliebig oft wiederholt werden oder beispielsweise auch für das Rückwärtsfahren bei umgekehrtem Hydropumpenförderstrom durchgeführt werden.

Die Steuerung und Regelung des hydrostatischen Antriebs erfolgt durch die Steuereinheit 14, die die Drehzahlen der Hydromotoren 9 über die Abtriebsdrehzahlmesser 18 mißt und die Antriebsdrehzahl des Antriebsmotors 1 über den Drehzahlmesser 5 mißt. Ebenso ist über die Steuereinheit 14 das Verdrängungsvolumen der Hydromotoren 9 und der Hydropumpe 6 veränderbar. Ebenso sind die über Steuerleitungen 13 verbundenen Elemente, wie beispielsweise die Differenzdruckventile 24, 33 oder das Verhältnisdruckregelventil 25 ansteuerbar. Gleiches gilt für sämtliche schaltbare Ventile 19, 27,30.

Zum Beschleunigen des Fahrzeugs wird die Motordrehzahl des Antriebsmotors 1 durch Betätigen des Fahrpedals 3 erhöht, so daß das Verdrängungsvolumen der Hydropumpe 6 vergrößert wird. Die Hydromotoren 9 haben anfänglich maximale Verdrängungsvolumen, werden aber bei maximalen Verdrängungsvolumen der Hydropumpe 6 auf kleinere Verdrängungsvolumina zurückgestellt. Dabei eilen die Verdrängungsvolumina der Hydromotoren 9 gegenüber ihrem sollwertigen Anteil des Pumpenfördervolumens soweit voraus, daß der Antriebsmotor 1 gegenüber seiner Solldrehzahl um ein bestimmtes Maß gedrückt wird. Dadurch wird zwischen Hydropumpe 6 und Hydromotoren 9 ein erhöhter Druck, als zur momentanen Konstantfahrt notwendig wäre, erzeugt, so daß am Rad 11 Überschußmoment für die Beschleunigung zur Verfügung steht.

Wird der Antriebsmotor 1 zu stark gedrückt, so wird die Voreilung der Hydromotoren 9 etwas reduziert, so daß die maximale Fahrgeschwindigkeit bei einer Antriebssolldrehzahl des Antriebsmotors 1 erreicht ist.

Durch die Drückung des Antriebsmotors bei jeder vorgewählten Solldrehzahl ist gewährleistet, daß dieser immer im Bereich der optimalen Einspritzung arbeitet, das heißt beste Ausnützung des Kraftstoffes und optimale Abgaszusammensetzung.

Wird das Fahrpedal in einem Bereich von 100 % bis 30 % Last reduziert, so gerät das Fahrzeug ins Rollen und wird durch die Fahrwiderstände langsamer. Die Drehzahl des Antriebsmotors 1 sinkt auf einen neuen Sollwert und die Hydromotoren 9 werden auf kleinere Verdrängungsvolumina nachgeführt. Ist die Fahrgeschwindigkeit der neuen Solldrehzahl des Antriebsmotors 1 erreicht, baut die Hydropumpe 6 wieder ein Hochdruck auf und die Hydromotoren regeln die Antriebsdrehzahl wieder auf einen neuen Sollwert.

Wird das Fahrpedal 3 in einen Bereich von 30 % bis 0 % Last reduziert, so bremsen die Fahrwiderstände und das Schleppmoment des Antriebsmotors 1. Dabei werden die Verdrängungsvolumina der Hydromotoren 9 proportional vergrößert, so daß das Schleppmoment des Antriebsmotors 1 verstärkt wird.

Dreht ein Rad 11 einzeln oder vollständig durch, so wird das Verdrängungsvolumen am zugehörigen Hydromotor 9 so lange reduziert, bis das Rad 11 nicht mehr durchdreht. Im Extremfall wird der jeweilige Hydromotor 9 vollständig auf Null gestellt, das heißt kein Drehmoment am Rad 11.

Als Maß für das Durchdrehen eines einzelnen Rades 11 wird aus den von Abtriebsdrehzahlmessern 18 gemessenen Drehzahlen der Mittelwert gebildet, mit dem die einzelnen Drehzahlen verglichen werden. Weicht eine Raddrehzahl zu sehr vom Mittelwert ab, wird von der Steuereinheit 14 über Verringerung des Verdrängungsvolumens das jeweilige Antriebsmoment reduziert, bis die Drehzahl dem Mittelwert wieder angeglichen ist. Dadurch läßt sich eine Antriebsschlupfregelung realisieren.

Analog dazu wird beim Blockieren eines Rades 11 das Verdrängungsvolumen der Hydromotoren 9 solange vermindert, bis das vom Antriebsmotor 1 erzeugte Schleppmoment auf die Räder 11 so klein ist, daß das Rad 11 nicht mehr zum blockieren neigt. Dies entspricht einer Motorschleppmomentregelung.

Wahlweise kann eine verschleißfreie Dauerbremse aktiviert werden. Dabei wird ein Teil der Antriebsleistung des Antriebsmotors 1 über das Verteilergetriebe 2 auf die Zusatzhydropumpe 7 geleitet, die während des Fahrens in die Zusatzstromleitung 32 hineinfördert. Über das Druckbegrenzungsventil 33 kann der Druck, den die Hydropumpe in der Zusatzstromleitung 32 aufbauen kann, begrenzt werden. Der Kühler 34 führt die erzeugte Wärme ab. Durch Verstellen des Verdrängungsvolumens der Zusatzhydropumpe 7 wird die über Zusatzstromleitung 32 abgegebene Antriebsleistung variiert. Diese Antriebsleistung wirkt hemmend auf den Antriebsmotor 1 zurück und wird über ein erhöhtes Motorschleppmoment auf die Hydromotoren 9 übergeleitet. Dadurch wird der hydrostatische Fahrantrieb gebremst.

Wird über die Betriebsbremse mit Antiblockiersystem gebremst, so wird die Dauerbremse, beispielsweise durch Verringerung des Verdrängungsvolumens der Zusatzhydropumpe 7 auf Null abgeschaltet und der Antriebsmotor 1 auf Leerlauf gestellt. Die Hydropumpe 6 und die Hydromotoren 9 werden beide auf Verdrängungsvolumen Null gestellt.

Um die mit der Hydropumpe 6 verbundenen Hydroleitungen 8 ständig mit ausreichender Hydraulikflüssigkeit zu versorgen, wird von der Speisepumpe 15 über die Speiseleitung 22 und die Rückschlagventile 23 ständig für ein ausreichendes Druckniveau gesorgt, das die Hydraulikleitungen 8 optimal füllt. Über das Druckbegrenzungsventil 24 wird der von der Speisepumpe 15 in der Speiseleitung 22 aufbaubare Druck eingestellt.

Der von der Speisepumpe 15 geförderte Volumenstrom wird über die Differenzdruckmeßblende 29 gemessen. Über das 4/3-Richtungsschaltventil 27 wird der Zylinder 28 betätigt. Über den Zylinder 28 kann die Stromrichtung der Pumpe gesteuert werden und eventuell auch das Verdrängungsvolumen der Hydropumpe 6 eingestellt werden. In Abhängigkeit von der Volumenstrommessung der Differenzdruckmeßblende 29 kann über das Verhältnisdruckregelventil 25 der Zylinder 28 so angesteuert werden, daß das Verdrängungsvolumen der Hydropumpe 6 abhängig von der Drehzahl des Antriebsmotors 1 gesteuert wird. Dabei ist der von der Speisepumpe 15 erzeugte und über die Differenzdruckmeßblende 29 gemessene Volumenstrom das Bezugsmaß für die drehzahlabhängige Steuerung.

Wahlweise kann die Steuereinheit 14 jeder Fahrgeschwindigkeit genau ein Verdrängungsvolumen jedes Hydromotors 9 zuordnen. In diesem Fall wird der hydrostatische Antrieb mit einer Motoren-Steuerung betrieben. Dieser Motoren-Steuerung ist eine entsprechende Motoren-Regelung zumindest bereichsweise überlagerbar, wodurch bei bestimmten Lastanforderungen und Betriebszuständen über Regelung der Verdrängungsvolumina der Hydromotoren 9 und/oder der Hydropumpe 6 der Antriebsmotor 1 beeinflußt wird.

Im Arbeitsbetrieb wird die gesamte Antriebsleistung des Antriebsmotors 1 über das Verteilergetriebe 2 auf die Zusatzhydropumpe 7 übertragen. Durch entsprechende Schaltung des 3/2-Wegeventils 30 fördert die Zusatzhydropumpe 7 den gesamten Volumenstrom in den Arbeitsstromkreis 31 hinein. Über den Arbeitsstromkreis 31 werden Arbeitsgeräte, wie beispielsweise ein Teleskoparm, eine Schaufel, eine Seilwinde oder ähnliches betätigt. Im Arbeitsbetrieb kann der hydrostatische Fahrantrieb über das Verteilergetriebe 2 vollständig vom Antrieb abgekoppelt sein. Wahlweise ist dies auch durch Leerlaufstellung der Übersetzungsgetriebe oder Nullstellung der Verdrängungsvolumina von Hydropumpe 6 oder Hydromotoren 9 erreichbar.

## Patentansprüche

1. Verfahren zum hydrostatischen Antreiben eines Fahrzeugs mit wenigstens zwei ideellen Achsen (12), die jeweils wenigstens ein antreibbares Rad (11) aufweisen, wobei jedes antreibbare Rad (11) von wenigstens einem mit wenigstens einer Hydraulikquelle (6) verbundenen Hydromotor (9) angetrieben wird, und die Antriebsleistung jedes Hydromotors (9) über ein Übersetzungsgetriebe (10, 35) auf das jeweilige Rad (11) übertragen wird,
**dadurch gekennzeichnet,**
daß die antreibbaren Räder (11) vor Erreichen einer ersten Grenzlast mit einer gleichen ersten Übersetzung der Übersetzungsgetriebe (10, 35) angetrieben werden, bei Erreichen der ersten Grenzlast die effektive Antriebsleistung der Räder (11) von wenigstens einer ideellen Achse (12) vermindert wird und bei Erreichen einer zweiten Grenzlast die Übersetzung der Übersetzungsgetriebe (10, 35) geändert wird, und die vor der ersten Grenzlast angetriebenen Räder (11) mit gleicher Übersetzung angetrieben werden.

2. Verfahren nach Anspruch 1,
**dadurch gekennzeichnet,**
daß die effektive Antriebsleistung eines angetriebenen Rades (11) durch Senken des Verdrängungsvolumens des zugehörigen Hydromotors (9) vermindert wird.

3. Verfahren nach wenigstens einem der vorhergehenden Ansprüche,
**dadurch gekennzeichnet,**
daß beim Ändern der Übersetzung der Übersetzungsgetriebe (10, 35) die Verdrängungsvolumen der Hydromotoren (9) im wesentlichen auf Null gestellt werden.

4. Verfahren nach wenigstens einem der vorhergehenden Ansprüche,
**dadurch gekennzeichnet,**
daß die Übersetzungsgetriebe (10, 35) in Stufen geschaltet werden.

5. Verfahren nach wenigstens einem der vorhergehenden Ansprüche,
**dadurch gekennzeichnet,**
daß die Übersetzung des Übersetzungsgetriebes (10, 35) von i=41 auf i=6,6 vermindert wird.

6. Verfahren nach wenigstens einem der vorhergehenden Ansprüche,
**dadurch gekennzeichnet,**
daß die Übersetzung des Übersetzungsgetriebes (10, 35) von i=12 auf i=3 geändert wird.

7. Verfahren nach wenigstens einem der vorhergehenden Ansprüche,
**dadurch gekennzeichnet,**
daß die Übersetzung des Übersetzungsgetriebes (10, 35) von i=24 auf i=4 geändert wird.

8. Verfahren nach wenigstens einem der vorhergehenden Ansprüche,
**dadurch gekennzeichnet,**
daß das Verdrängungsvolumen der als Hydropumpe (6) ausgeführten und von einem Antriebsmotor (1) angetriebenen Hydraulikquelle (6) bei Leerlauf des Antriebsmotors (1) im wesentlichen gleich Null ist und bei Erhöhung der Antriebsmotordrehzahl vergrößert wird.

9. Verfahren nach wenigstens einem der vorhergehenden Ansprüche,
**dadurch gekennzeichnet,**
daß die Fahrtrichtung durch Reversieren der Hydropumpe (6) umgekehrt wird.

10. Verfahren nach wenigstens einem der vorhergehenden Ansprüche,
**dadurch gekennzeichnet,**
daß die Hydromotoren (9) stromlos auf Verdrängungsvolumen Null gestellt werden.

11. Verfahren nach wenigstens einem der vorhergehenden Ansprüche,
**dadurch gekennzeichnet,**
daß die Hydromotoren (9) zum Beschleunigen wenigstens anfänglich auf maximales Verdrängungsvolumen gestellt werden.

12. Verfahren nach wenigstens einem der vorhergehenden Ansprüche,
**dadurch gekennzeichnet,**
daß beim Beschleunigen das Verdrängungsvolumen der Hydromotoren (9) verringert wird, wenn die Hydropumpe (6) maximales Verdrängungsvolumen erreicht hat.

13. Verfahren nach wenigstens einem der vorhergehenden Ansprüche,
**dadurch gekennzeichnet,**
daß das Verdrängungsvolumen eines antreibenden Hydromotors (9) relativ niedriger eingestellt wird, als sein sollwertiger Anteil am Hydropumpenvolumen.

14. Verfahren nach wenigstens einem der vorhergehenden Ansprüche,
**dadurch gekennzeichnet,**
daß bei Erreichen einer gewünschten Fahrgeschwindigkeit die Drehzahl des Antriebsmotors (1) durch Ändern der Verdrängungsvolumina von Hydromotoren (9) und/oder Hydropumpe (6) auf eine gewünschte Größe geregelt wird.

15. Verfahren nach wenigstens einem der vorhergehenden Ansprüche,
**dadurch gekennzeichnet,**
daß zum Bremsen eine im wesentlichen verschleißfreie Dauerbremse (7, 32) aktiviert wird.

16. Verfahren nach wenigstens einem der vorhergehenden Ansprüche,
**dadurch gekennzeichnet,**
daß zum Verändern der Bremswirkung der Dauerbremse (7, 13) das Verdrängungsvolumen einer verstellbaren, an den Antriebsmotor gekoppelten Zusatzhydropumpe (7) verändert wird.

17. Verfahren nach wenigstens einem der vorhergehenden Ansprüche,
**dadurch gekennzeichnet,**
daß zum Verändern der Bremswirkung der Dauerbremse ein Druckbegrenzungsventil (33) in einer Zusatzstromleitung (32) in die die Zusatzhydropumpe (7) hineinfördert, verstellt wird.

18. Verfahren nach wenigstens einem der vorhergehenden Ansprüche,
**dadurch gekennzeichnet,**
daß der von der Zusatzhydropumpe (7) geförderte Strom beim Fahren in die Zusatzstromleitungen (32) gelenkt wird und im Arbeitsbetrieb in einen Arbeitsstromkreis (31) gelenkt wird.

19. Verfahren nach wenigstens einem der vorhergehenden Ansprüche,
**dadurch gekennzeichnet,**
daß bei Schlupf eines angetriebenen Rades (11) das Verdrängungsvolumen wenigstens des dieses Rad (11) antreibenden Hydromotors (9) reduziert wird.

20. Verfahren nach wenigstens einem der vorhergehenden Ansprüche,
**dadurch gekennzeichnet,**
daß aus den Drehzahlen der angetriebenen Räder (11) ein Referenzwert gebildet wird, die Drehzahl jedes angetriebenen Rades (11) mit dem Referenzwert verglichen wird und in Abhängigkeit der Abweichung einer Drehzahl des angetriebenen Rades (11) vom Referenzwert das Verdrängungsvolumen des Hydromotors (9) dieses Rades (11) verändert wird.

21. Verfahren nach wenigstens einem der vorhergehenden Ansprüche,
**dadurch gekennzeichnet,**
daß beim Bremsen mit Antiblockiersystem die Dauerbremse (7, 32) abgeschaltet wird.

22. Verfahren nach wenigstens einem der vorhergehenden Ansprüche,
**dadurch gekennzeichnet,**
daß beim Bremsen mit Antiblockiersystem der Antriebsmotor (1) auf Leerlauf gestellt wird.

23. Verfahren nach wenigstens einem der vorhergehenden Ansprüche,
**dadurch gekennzeichnet,**
daß beim Bremsen mit Antiblockiersystem die Verdrängungsvolumina von Hydropumpe (6) und/oder Hydromotoren (9) der angetriebenen Räder (11) auf Null gestellt werden.

24. Verfahren nach wenigstens einem der vorhergehenden Ansprüche,
**dadurch gekennzeichnet,**
daß einer Fahrgeschwindigkeit ein Verdrängungsvolumen der Hydromotoren (9) zugeordnet wird.

## Claims

1. A method of hydrostatically driving a vehicle with at least two ideal axles (12) each having at least one drivable wheel (11), each drivable wheel (11) being driven by at least one hydraulic motor (9) connected to a hydraulic source (6), and the drive power of each hydraulic motor (9) being transmitted to the respective wheel (11) by a transmission gear (10, 35),
characterised in that before reaching a first limiting load the drivable wheels (11) are driven at an identical first ratio of the transmission gear (10, 35), on reaching the first limiting load the effective driving power of the wheels (11) of at least one ideal axle (12) is reduced, and on reaching a second limiting load the transmission gear (10, 35) ratio is altered and the wheels (11) driven before the first limiting load are driven at the same gear ratio.

2. A method according to claim 1, characterised in that the effective driving power of a driven wheel (11) is reduced by lowering the displacement volume of the associated hydraulic motor (9).

3. A method according to at least one of the preceding claims, characterised in that when the transmission gear (10, 35) ratio is altered, the displacement volume of the hydraulic motors (9) is set at substantially zero.

4. A method according to at least one of the preceding claims, characterised in that the transmission gear (10, 35) is shifted in stages.

5. A method according to at least one of the preceding claims, characterised in that the transmission gear (10, 35) ratio is reduced from i = 41 to i = 6.6.

6. A method according to at least one of the preceding claims, characterised in that the transmission gear (10, 35) ratio is altered from i = 12 to i = 3.

7. A method according to at least one of the preceding claims, characterised in that the transmission gear (10, 35) ratio is altered from i = 24 to i = 4.

8. A method according to at least one of the preceding claims, characterised in that the displacement volume of the hydraulic source (6), which is constructed as a hydraulic pump (6) and driven by a drive motor (1), is substantially zero when the drive motor (1) is idling, and is increased when the drive motor speed is increased.

9. A method according to at least one of the preceding claims, characterised in that the direction of travel is reversed by reversing the hydraulic pump (6).

10. A method according to at least one of the preceding claims, characterised in that the hydraulic motors (9) when out of circuit are set at a zero displacement volume.

11. A method according to at least one of the preceding claims, characterised in that for the purpose of acceleration, the hydraulic motors (9) are set at least initially at the maximum displacement volume.

12. A method according to at least one of the preceding claims, characterised in that during acceleration, the displacement volume of the hydraulic motors (9) is reduced when the hydraulic pump (6) has reached the maximum displacement volume.

13. A method according to at least one of the preceding claims, characterised in that the displacement volume of a driving hydraulic motor (9) is set lower than its set-value proportion of the hydraulic-pump volume.

14. A method according to at least one of the preceding claims, characterised in that when a desired driving speed is reached, the speed of the drive motor (1) is controlled to a desired value by altering the displacement volume of the hydraulic motors (9) and/or the hydraulic pump (6).

15. A method according to at least one of the preceding claims, characterised in that a substantially wear-free sustained-action brake (7, 32) is used for braking.

16. A method according to at least one of the preceding claims, characterised in that in order to alter the action of the sustained-action brake (7, 13), the displacement volume of an adjustable additional hydraulic pump (7) connected to the drive motor is altered.

17. A method according to at least one of the preceding claims, characterised in that in order to alter the braking action of the sustained-action brake, a pressure-limiting valve (33) is adjusted in an additional circuit (32) into which the additional hydraulic pump (7) delivers.

18. A method according to at least one of the preceding claims, characterised in that the current delivered by the additional hydraulic pump (7) during driving is guided into the additional circuits (32) and during working operation is guided into a working circuit (31).

19. A method according to at least one of the preceding claims, characterised in that if a driven wheel (11) slips, the displacement volume of at least the hydraulic motor (9) driving this wheel (11) is reduced.

20. A method according to at least of the preceding claims, characterised in that the speed of the driven wheels (11) is used to obtain a reference value, the speed of each driven wheel (11) is compared with the reference value and the displacement volume of the hydraulic motor (9) of this wheel (11) is altered in dependence on the deviation between the speed of the driven wheel (11) and the reference value.

21. A method according to at least one of the preceding claims, characterised in that during braking with an anti-skid system the sustained-action brake (7, 32) is switched off.

22. A method according to at least one of the preceding claims, characterised in that during braking with an anti-skid system the drive motor (1) is set at idling.

23. A method according to at least one of the preceding claims, characterised in that during braking with an anti-skid system the displacement volume of the hydraulic pump (6) and/or the hydraulic motors (9) of the driven wheels (11) are set at zero.

24. A method according to at least one of the preceding claims, characterised in that a displacement volume of the hydraulic motors (9) is associated with each driving speed.

## Revendications

1. Procédé de propulsion hydrostatique pour un véhicule composé d'au moins deux axes fictifs (12) qui comprennent chacun au moins une roue motrice (11), chaque roue motrice (11) étant propulsée par au moins un moteur hydraulique (9) relié à au moins une source hydraulique, (6) et la puissance de propulsion de chaque moteur hydraulique (9) étant transmise sur chaque roue (11) correspondante par un dispositif de transmission (10, 35),
caractérisé en ce que
les roues motrices (11) sont entraînées avec un premier rapport de transmission uni forme du dispositif de transmission (10, 35) avant d'atteindre une première charge limite, la puissance effective d'entraînement des roues (11) d'au moins un axe fictif (12) est diminuée lorsque la première charge limite est atteinte, et le rapport de transmission du dispositif de transmission (10, 35) est modifié lorsqu'une deuxième charge limite est atteinte, et les roues (11) motrices avant d'atteindre la première charge limite sont entraînées avec le même rapport de transmission.

2. Procédé selon la revendication 1, caractérisé en ce que la puissance d'entraînement effective d'une roue (11) motrice est diminuée par l'abaissement du volume de déplacement du moteur hydraulique (9) correspondant.

3. Procédé selon au moins l'une des revendications précédentes, caractérisé en ce que le volume de déplacement des moteurs hydrauliques (9) est pour l'essentiel amené à zéro, lorsque le rapport de transmission des dispositifs de transmission (10, 35) est modifié.

4. Procédé selon au moins l'une des revendications précédentes, caractérisé en ce que les dispositifs de transmission (10, 35) sont échelonnés par paliers.

5. Procédé selon au moins l'une des revendications précédentes, caractérisé en ce que le rapport de transmission du dispositif de transmission (10, 35) est abaissé de i=41 à i=6,6.

6. Procédé selon au moins l'une des revendications précédentes, caractérisé en ce que le rapport de transmission du dispositif de transmission (10, 35) est abaissé de i=12 à i=3.

7. Procédé selon au moins l'une des revendications précédentes, caractérisé en ce que le rapport de transmission du dispositif de transmission (10, 35) est abaissé de i=24 à i=4.

8. Procédé selon au moins l'une des revendications précédentes, caractérisé en ce que le volume de déplacement de la source hydraulique (6), conçue comme une pompe hydraulique (6) et propulsée par un moteur de propulsion (1), est pour l'essentiel égal à zéro lorsque le moteur de propulsion (1) tourne à vide, et en ce qu'il est augmenté lorsque le régime du moteur de propulsion augmente.

9. Procédé selon au moins l'une des revendications précédentes, caractérisé en ce que la direction du véhicule est inversée par un mouvement d'inversion de la pompe hydraulique (6).

10. Procédé selon au moins l'une des revendications précédentes, caractérisé en ce que les moteurs hydrauliques (9) ont un volume de déplacement nul sans écoulement.

11. Procédé selon au moins l'une des revendications précédentes, caractérisé en ce que le volume de déplacement des moteurs hydrauliques (9) est réglé au maximum, au moins au début, pour accélérer le véhicule.

12. Procédé selon au moins l'une des revendications précédentes, caractérisé en ce que le volume de déplacement des moteurs hydrauliques (9) est abaissé au cours de l'accélération, lorsque le volume de déplacement de la pompe hydraulique (6) a atteint le maximum.

13. Procédé selon au moins l'une des revendications précédentes, caractérisé en ce que le volume de déplacement d'un moteur hydraulique (9) propulsant est réglé à un niveau relativement plus faible que pour sa part théorique en volume de pompage hydraulique.

14. Procédé selon au moins l'une des revendications précédentes, caractérisé en ce que, lorsque le véhicule atteint une vitesse souhaitée, le régime du moteur de propulsion (1) est réglé à un niveau souhaité en modifiant les volumes de déplacement des moteurs hydrauliques (9) et/ou de la pompe hydraulique (6).

15. Procédé selon au moins l'une des revendications précédentes, caractérisé en ce que le freinage est assuré par un frein continu (7, 32), pour l'essentiel inusable.

16. Procédé selon au moins l'une des revendications précédentes, caractérisé en ce que la variation du volume de déplacement d'une pompe hydraulique complémentaire (7), réglable et couplée au moteur de propulsion, est destinée à modifier l'action du freinage du frein continu (7, 13).

17. Procédé selon au moins l'une des revendications précédentes, caractérisé en ce qu'un limiteur de pression (33) dans une conduite de courant complémentaire (32), alimentée par la pompe hydraulique complémentaire (7), est réglé pour modifier l'action du freinage du frein continu.

18. Procédé selon au moins l'une des revendications précédentes, caractérisé en ce que l'écoulement refoulé par la pompe hydraulique complémentaire (7) est transporté vers les conduites de courant complémentaires (32) lorsque le véhicule roule, et vers le circuit d'écoulement de travail lorsque le véhicule est en phase de travail.

19. Procédé selon au moins l'une des revendications précédentes, caractérisé en ce que, lors du patinage d'une roue (11) motrice, le volume de déplacement du moteur hydraulique (9) propulsant au moins cette roue est abaissé.

20. Procédé selon au moins l'une des revendications précédentes, caractérisé en ce que les vitesses des roues (11) motrices permettent de définir une valeur de référence, la vitesse de chaque roue (11) motrice est comparée à la valeur de référence et en fonction de la dispersion de la vitesse de la roue (11) motrice avec la valeur de référence le volume de déplacement du moteur hydraulique (9) de cette roue (11) est modifiée.

21. Procédé selon au moins l'une des revendications précédentes, caractérisé en ce que le frein continu (7, 32) est mis hors service au cours du freinage avec le système d'antiblocage.

22. Procédé selon l'une des revendications précédentes, caractérisé en ce que le moteur de propulsion (1) est réglé à vide au cours du freinage avec le système d'antiblocage.

23. Procédé selon au moins l'une des revendications précédentes, caractérisé en ce que le volume de déplacement de la pompe hydraulique (6) et/ou des moteurs hydrauliques (9) des roues (11) motrices est amené à zéro au cours du freinage avec le système d'antiblocage.

24. Procédé selon au moins l'une des revendications précédentes, caractérisé en ce que le volume de déplacement des moteurs hydrauliques (9) est défini en fonction de la vitesse du véhicule.
